# FASCICULE DE BREVET EUROPEEN

(11) **EP 2 477 827 B1**
(45) Date de publication et mention de la délivrance du brevet: **01.04.2015**
(21) Numéro de dépôt: 10770552.7
(22) Date de dépôt: 13.09.2010
(51) Int. Cl.: B60G 21/05, B62D 29/00

(54) **TRAVERSE A PROFIL FERME POUR ESSIEU ARRIERE D'UN VEHICULE AUTOMOBILE**
QUERTRÄGER MIT GESCHLOSSENEM PROFIL FÜR DIE HINTERACHSE EINES KRAFTFAHRZEUGES
CLOSED PROFILE CROSSMEMBER FOR REAR AXLE OF MOTOR VEHICLE

(30) Priorité: 17.09.2009 FR 0956381
(43) Date de publication de la demande: 25.07.2012
(73) Titulaire: Renault s.a.s., 92100 Boulogne-Billancourt (FR)
(72) Inventeur: HACHET, Guillaume, F-72220 Laigne En Belin (FR)
(86) Numéro de dépôt international: PCT/FR2010/051897
(87) Numéro de publication internationale: WO 2011/033213

(56) Documents cités:
- EP-A1- 1 724 132
- DE-A1- 10 102 759
- DE-B3-102004 055 117
- US-B1- 6 233 826
- US-B1- 6 510 763

## Description

La présente invention est relative à la structure d'un essieu arrière pour véhicule automobile, et plus précisément à la structure d'une traverse à profil fermé déformable en torsion permettant de relier deux bras longitudinaux de l'essieu arrière.

De telles traverses pour essieu arrière sont généralement formées à partir d'un tube de section circulaire, rectangulaire ou ovale, dont chaque tronçon d'extrémité est destiné à être relié à l'un des deux bras de l'essieu, un tronçon intermédiaire du tube étant embouti pour obtenir une section transversale en forme de U ou de V. Le tronçon intermédiaire assure la rigidité en flexion et la souplesse en torsion.

Une traverse de ce type est par exemple connue du document US 6, 510, 763. D'après ce document, pour augmenter la rigidité en flexion, notamment au niveau des deux tronçons de transition reliant chaque tronçon d'extrémité de la traverse au tronçon intermédiaire, ces deux tronçons de transition sont remplis par une mousse synthétique ou métallique. La mousse est directement injectée au travers des extrémités de la traverse. En variante, des cristaux ou de la poudre métallique mélangée à des agents moussants sont introduits par les extrémités de la traverse dans les tronçons de transition, puis expansés par chauffage. Dans les deux cas, le remplissage des tronçons de transition n'est rendu possible que dans la mesure où les parois de la traverse dans le tronçon intermédiaire sont accolées l'une à l'autre.

Or, dans de telles configurations, les parois qui sont en contact dans le tronçon intermédiaire se déplacent l'une contre l'autre lors de la torsion de la traverse, ce qui engendre une corrosion par frottement des parois internes. Pour pallier cet inconvénient, il est déjà connu, notamment du document FR 2 805 479 au nom de la Demanderesse, d'emboutir le tube formant la traverse de façon à garantir, dans le tronçon intermédiaire, une distance minimale entre les parois internes.

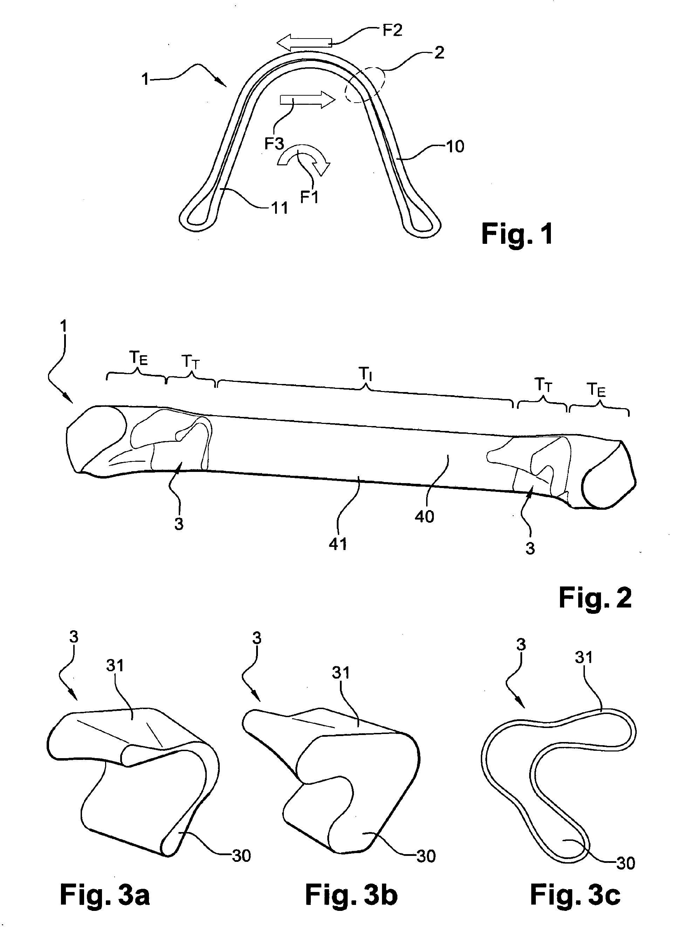

Néanmoins, lors de la torsion de la traverse, les parois vont subir un déplacement relatif, de sorte que certaines zones des parois vont entrer en contact. Cette situation est représentée schématiquement sur la figure 1 qui montre, sur une section d'une traverse 1 prise dans le tronçon intermédiaire, une zone de contact 2 entre la paroi supérieure 10 et la paroi inférieure 11 lorsque la traverse est soumise à un effort de torsion (flèche F1) provoquant un rapprochement des deux parois (schématisé par les flèches F2 et F3). Il en résulte que la traverse reste soumise localement à des problèmes de corrosion par frottement.

Il est par ailleurs connu, par le document EP 2 132 052 qui comporte les caractéristiques du préambule de la revendication 1, des renforts locaux sous la forme de manchon positionnés dans les tronçons de transition afin d'augmenter la rigidité en torsion. La présente invention a pour but de supprimer les risques de corrosion dans le tronçon intermédiaire d'une traverse à profil fermé en augmentant la résistance de la traverse en raideur.

Pour ce faire, l'invention a pour objet une traverse à profil fermé déformable en torsion pour essieu arrière d'un véhicule automobile, permettant de relier deux bras longitudinaux dudit essieu, ladite traverse étant formée à partir d'un tube comportant des tronçons d'extrémité aptes à être reliés chacun à l'un des deux bras, un tronçon intermédiaire embouti pour obtenir une section transversale en forme de U ou de V dans laquelle les parois internes du tube sont séparées par un espace, et deux tronçons de transition dont la section transversale se modifie pour relier chaque tronçon d'extrémité au tronçon intermédiaire, la traverse comportant en outre deux inserts obturant chacun une extrémité du tronçon intermédiaire sur tout ou partie de la longueur de chaque tronçon de transition, de manière à éviter tout contact entre les parois internes au niveau du tronçon intermédiaire lorsque la traverse est soumise à un effort de torsion, caractérisé en ce que la traverse comporte en outre des moyens (40, 41) de liaison mécanique des deux inserts (3) entre eux.

Chaque insert comporte de préférence une âme, par exemple en plastique de type polypropylène, entourée d'une couche de matériau adhésif formant moyen de maintien de l'insert contre les parois internes du tube.

La couche de matériau adhésif peut être est une mousse de polyuréthanes ou encore une colle thermodurcissable.

Les moyens de liaison mécanique des deux inserts entre eux permettent de garantir un bon maintien en place des inserts à l'intérieur de la traverse.

Différents avantages et caractéristiques de l'invention seront mieux compris au vu de la description suivante d'exemples de réalisation, faite en référence aux figures annexées, dans lesquelles :
- la figure 1, déjà décrite, illustre une section d'une traverse à profil fermé selon l'art antérieur dans le tronçon intermédiaire de la traverse ;
- la figure 2 illustre en perspective une traverse conforme à la présente invention, dans une étape intermédiaire ;
- les figures 3a et 3b sont des vues en perspective des deux inserts de la figure 2 ;
- la figure 3c est une vue en coupe transversale dans la zone milieu d'un insert de la figure 2 ;
- la figure 4 illustre une traverse conforme à la présente invention ;
- La figure 5 est une vue en perspective des deux inserts liés mécaniquement de la figure 4 ;
- La figure 6 est une vue en coupe transversale prise dans le tronçon intermédiaire de la traverse selon la figure 4.

Une réalisation possible d'une traverse conforme à l'invention va à présent être décrite en référence aux différentes figures. Sur la figure 2, une traverse 1 à profil fermé déformable en torsion est formée classiquement à partir d'un tube comportant deux tronçons d'extrémité T_{E} aptes à être reliés chacun à l'un des deux bras (non représentés) d'un essieu arrière de véhicule automobile. Le tube comporte en outre un tronçon intermédiaire T_{I} embouti pour obtenir une section transversale en forme de U ou de V.

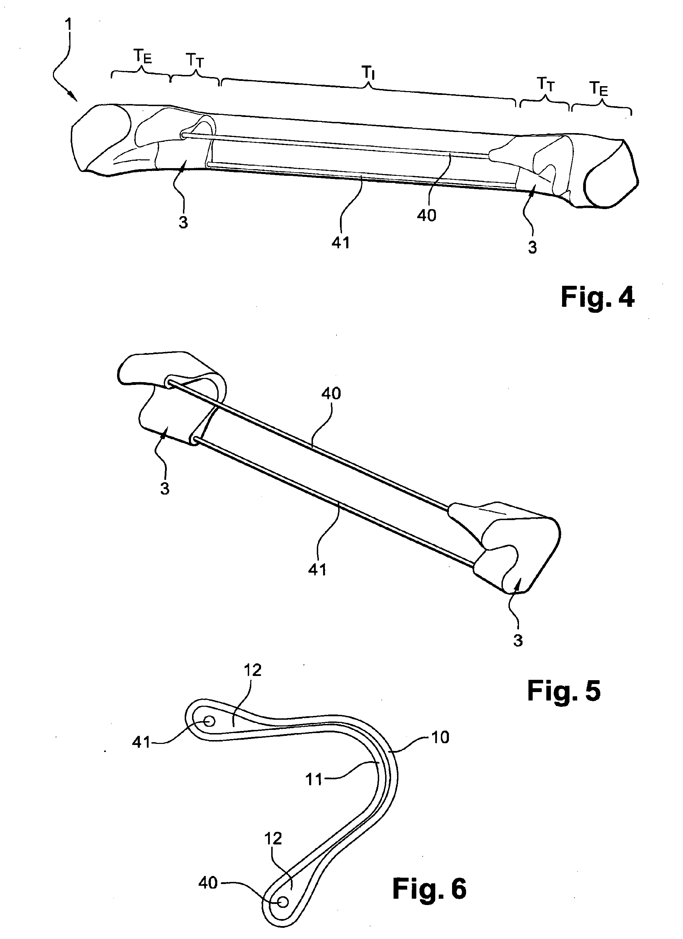

Comme indiqué précédemment, le tube, de préférence en acier, est embouti dans cette zone intermédiaire de sorte qu'un certain espace existe entre les parois internes (visibles sous les références 10 et 11 sur la figure 6), de manière à empêcher la corrosion par frottement. Le tube formant traverse 1 comporte également deux tronçons de transition T_{T} dont la section transversale se modifie pour relier chaque tronçon d'extrémité T_{E} au tronçon intermédiaire T_{I}.

Conformément à l'invention, la traverse 1 comporte en outre deux inserts 3 venant chacun obturer une extrémité du tronçon intermédiaire T_{I} sur tout ou partie de la longueur de chaque tronçon de transition T_{T}.

Conformément à l'invention, la traverse 1 comporte en outre deux inserts 3 venant chacun obturer une extrémité du tronçon intermédiaire T_{I} sur tout ou partie de la longueur de chaque tronçon de transition T_{T}.

La mise en place d'un insert 3 de part et d'autre de la traverse permet de réduire le mouvement relatif des deux parois du tube et d'éviter ainsi tout contact entre ces parois au niveau du tronçon intermédiaire lorsque la traverse 1 est soumise à un effort de torsion.

Les figures 3a à 3c illustrent différentes vues de l'insert 3. Celui-ci est de préférence formé d'une âme 30 en matériau suffisamment rigide pour permettre de réduire le déplacement relatif des parois, typiquement un plastique de type polypropylène. Pour assurer le maintien en place de l'insert à l'intérieur de la traverse, l'âme 30 est avantageusement entourée d'une couche 31 de quelques millimètres en matériau adhésif. Cette couche 31 peut être constituée d'une mousse de polyuréthanes ou d'une colle thermodurcissable. Dans les deux cas, les inserts sont mis en place à l'intérieur de la traverse 1 en introduisant chaque insert par les tronçons d'extrémité T_{E}. Une étape de chauffage de la traverse 1 équipée des deux inserts 3 permet ensuite soit, l'expansion de la mousse, soit le durcissement de la colle. A l'issue de cette étape de chauffage, les inserts 3 sont maintenus à l'intérieur de la traverse 1. Sur les figures, on voit que la surface externe de chaque insert 3 épouse complètement les formes des parois internes de la traverse. Ainsi, la section transversale d'un insert 3 varie de la même façon que la section transversale du tronçon de la traverse qu'il occupe, de manière à obturer parfaitement la traverse.

Les inserts 3 sont étanches et permettent une protection non seulement contre la corrosion par frottement, mais aussi contre la corrosion par oxydation dans le tronçon situé entre les deux inserts.

En outre, les inserts permettent de réduire le niveau de contrainte en torsion en élargissant les zones de contraintes au niveau des gouttes, c'est-à-dire au niveau des zones extrémales de la section en forme de U ou de V de la traverse 1. On peut donc avantageusement envisager de réduire l'épaisseur des parois du tube, ce qui permet d'obtenir une traverse plus légère et moins coûteuse. traverse 1 non seulement grâce à la couche adhésive 31 entourant l'âme de chaque insert 30, mais également grâce à des moyens de liaison mécanique. Les moyens de liaison mécanique sont ici sous la forme de deux câbles 40, 41, de préférence en acier, s'étendant sensiblement parallèlement l'un à l'autre à l'intérieur de la traverse entre les deux inserts 3, chaque câble s'étendant plus précisément longitudinalement dans une des deux gouttes 12 de la traverse 1, comme particulièrement visible sur la figure 6. Chaque extrémité des câbles 40 et 41 est fixée à l'un des deux inserts 3 par tout moyen de fixation tel que vis ou autre. Pour la fabrication d'une telle traverse, on commence par introduire l'un des inserts 3 auquel on a fixé les extrémités de câbles 40, 41 dans la traverse, puis on introduit et fixe l'autre insert aux extrémités libres des câbles. L'ensemble est ensuite chauffé comme décrit ci-avant, pour permettre notamment à la couche adhésive 31 des inserts 3 d'adhérer effectivement aux parois internes de la traverse. L'utilisation de câbles souples est préférée dans la mesure où ces câbles sont légers et moins coûteux. Leur introduction à l'intérieur de la traverse s'avère néanmoins moins facile, et il peut être envisagé, pour faciliter l'assemblage, de remplacer les câbles par des tiges rigides. Dans tous les cas, la longueur des câbles ou des tiges rigides doit être adaptée pour correspondre à la distance séparant les inserts une fois mis en place.

## Revendications

1. Traverse (1) à profil fermé déformable en torsion pour essieu arrière d'un véhicule automobile permettant de relier deux bras longitudinaux dudit essieu, ladite traverse (1) étant formée à partir d'un tube comportant des tronçons d'extrémité (T_{E}) aptes à être reliés chacun à l'un des deux bras, un tronçon intermédiaire (T_{I}) embouti pour obtenir une section transversale en forme de U ou de V dans laquelle les parois internes (10, 11) du tube sont séparées par un espace, et deux tronçons de transition (T_{T}) dont la section transversale se modifie pour relier chaque tronçon d'extrémité (T_{E}) au tronçon intermédiaire (T_{I}), la traverse comportant en outre deux inserts (3) obturant chacun une extrémité du tronçon intermédiaire (T_{I}) sur tout ou partie de la longueur de chaque tronçon de transition (T_{T}), de manière à éviter tout contact entre les parois internes (10, 11) au niveau du tronçon intermédiaire (T_{I}) lorsque la traverse (1) est soumise à un effort de torsion, **caractérisé en ce que** la traverse comporte en outre des moyens (40, 41) de liaison mécanique des deux inserts (3) entre eux.

2. Traverse (1) selon la revendication 1, **caractérisée en ce que** chaque insert (3) comporte une âme (30) entourée d'une couche (31) de matériau adhésif formant moyen de maintien de l'insert (30) contre les parois internes du tube.

3. Traverse (1) selon l'une quelconque des revendications précédentes, **caractérisée en ce que** ladite couche (31) est une mousse de polyuréthanes.

4. Traverse (1) selon l'une quelconque des revendications 1 ou 2, **caractérisée en ce que** ladite couche (31) est une colle thermodurcissable.

5. Traverse (1) selon l'une quelconque des revendications précédentes, **caractérisée en ce que** ladite âme (31) est en plastique de type polypropylène.

6. Traverse (1) selon la revendication 1, **caractérisée en ce que** les moyens (40, 41) de liaison mécanique comportent deux câbles s'étendant sensiblement parallèlement l'un à l'autre à l'intérieur de la traverse entre les deux inserts, chacun des câbles s'étendant longitudinalement dans une goutte (12) de la traverse (1), chaque extrémité des câbles étant fixée à l'un des deux inserts (3).

7. Traverse (1) selon la revendication 1, **caractérisée en ce que** les moyens (40, 41) de liaison mécanique comportent deux tiges rigides s'étendant sensiblement parallèlement l'une à l'autre à l'intérieur de la traverse entre les deux inserts, chacune des tiges s'étendant longitudinalement dans une goutte (12) de la traverse (1), chaque extrémité des tiges étant fixée à l'un des deux inserts (3).

## Patentansprüche

1. Querträger (1) mit geschlossenem torsionsverformbarem Profil für eine Hinterachse eines Kraftfahrzeugs, der es erlaubt, zwei Längsarme der Achse zu verbinden, wobei der Querträger (1) ausgehend von einem Rohr gebildet ist, das Endabschnitte (T_{E}) aufweist, die geeignet sind, um jeweils mit einem der zwei Arme verbunden zu werden, einen aufgeschrumpften Zwischenabschnitt (T_{I}), um einen Querschnitt in Uoder V-Form zu erzielen, in dem die Innenwände (10, 11) des Rohrs durch einen Raum getrennt sind, und zwei Übergangsabschnitte (T_{T}), deren Querschnitt sich ändert, um jeden Endabschnitt (T_{E}) mit dem Zwischenabschnitt (T_{I}) zu verbinden, wobei der Querträger außerdem zwei Einsätze (3) aufweist, die jeweils ein Ende des Zwischenabschnitts (T_{I}) auf einem Teil oder der gesamten Länge jedes Übergangsabschnitts (T_{T}) derart verschließen, dass jeder Kontakt zwischen den Innenwänden (10, 11) im Bereich des Zwischenabschnitts (T_{I}) vermieden wird, wenn der Querträger (1) einer Torsionskraft unterworfen wird, **dadurch gekennzeichnet, dass** der Querträger außerdem Mittel (40, 41) zum mechanischen Verbinden der zwei Einsätze (3) miteinander aufweist.

2. Querträger (1) nach Anspruch 1, **dadurch gekennzeichnet, dass** jeder Einsatz (3) eine Seele (30) aufweist, die von einer Schicht (31) aus klebendem Material umgeben ist, das ein Haltemittel des Einsatzes (3) gegen die Innenwände des Rohrs bildet.

3. Querträger (1) nach einem der vorhergehenden Ansprüche, **dadurch gekennzeichnet, dass** die Schicht (31) ein Polyurethanschaumstoff ist.

4. Querträger (1) nach einem der Ansprüche 1 oder 2, **dadurch gekennzeichnet, dass** die Schicht (31) ein wärmehärtbarer Klebstoff ist.

5. Querträger (1) nach einem der vorhergehenden Ansprüche, **dadurch gekennzeichnet, dass** die Seele (30) aus einem Kunststoff des Typs Polypropylen besteht.

6. Querträger (1) nach Anspruch 1, **dadurch gekennzeichnet, dass** die Mittel (40, 41) zum mechanischen Verbinden zwei Kabel aufweisen, die sich im Wesentlichen parallel zueinander im Inneren des Querträgers zwischen den zwei Einsätzen erstrecken, wobei sich jedes Kabel längs in einem Tropfenelement (12) des Querträgers (1) erstreckt, wobei jedes Ende der Kabel an einem der zwei Einsätze (3) befestigt ist.

7. Querträger (1) nach Anspruch 1, **dadurch gekennzeichnet, dass** die Mittel (40, 41) zum mechanischen Verbinden zwei starre Schäfte, die sich im Wesentlichen parallel zueinander im Inneren des Querträgers zwischen den zwei Einsätzen erstrecken, aufweisen, wobei sich jeder der Schäfte längs in einem Tropfenelement (12) des Querträgers (1) erstreckt, wobei jedes Ende der Schäfte an einem der zwei Einsätze (3) befestigt ist.

## Claims

1. Torsionally deformable closed profile crossmember (1) for the rear axle of a motor vehicle making it possible to connect two longitudinal arms of said axle, said crossmember (1) being formed from a tube comprising end portions (T_{E}) that are each connectable to one of the two arms; an intermediate portion (T_{I}) that is deep-drawn so as to obtain a U-shaped or V-shaped transverse section in which the inner walls (10, 11) of the tube are separated by a space; and two transition portions (T_{T}), the transverse section of which is modified so as to connect each end portion (T_{E}) to the intermediate portion (T_{I}), the crossmember in addition comprising two inserts (3), each closing one end of the intermediate portion (T_{I}) for all or part of the length of each transition portion (T_{I}), so as to avoid all contact between the inner walls (10, 11) at the level of the intermediate portion (T_{I}) when the crossmember (1) is subjected to a torsional loading, **characterized in that** the crossmember comprises in addition means (40, 41) for the mechanical connection of the two inserts (3) to one another.

2. Crossmember (1) according to Claim 1, **characterized in that** each insert (3) comprises a core (30) enclosed by a layer (31) of adhesive material providing a means for maintaining the insert (3) against the internal walls of the tube.

3. Crossmember (1) according to either of the preceding claims, **characterized in that** said layer (31) is a polyurethane foam.

4. Crossmember (1) according to either of Claims 1 and 2, **characterized in that** said layer (31) is a thermosetting adhesive.

5. Crossmember (1) according to one of the preceding claims, **characterized in that** said core (30) is made of a plastic material of the polypropylene type.

6. Crossmember (1) according to Claim 1, **characterized in that** the means (40, 41) of mechanical connection comprise two cables extending substantially parallel with one another inside the crossmember between the two inserts, each of the cables extending longitudinally inside one droplet-shaped loop (12) of the crossmember (1), each end of the cables being fixed to one of the two inserts (3).

7. Crossmember (1) according to Claim 1, **characterized in that** the means (40, 41) of mechanical connection comprise two rigid rods extending substantially parallel with one another inside the crossmember between the two inserts, each of the rods extending longitudinally inside one droplet-shaped loop (12) of the crossmember (1), each end of the rods being fixed to one of the two inserts (3).
